# EUROPÄISCHE PATENTSCHRIFT

(11) **EP 2 366 286 B1**
(45) Veröffentlichungstag und Bekanntmachung des Hinweises auf die Patenterteilung: **28.03.2012**
(21) Anmeldenummer: 11401036.6
(22) Anmeldetag: 01.03.2011
(51) Int. Cl.: H02G 7/00, A01M 29/32

(54) **Isolierende Vogelschutzabdeckung**
Isolating bird protection cover
Recouvrement de protection isolant contre les oiseaux

(30) Priorität: 19.03.2010 DE 202010000420 U
(43) Veröffentlichungstag der Anmeldung: 21.09.2011
(73) Patentinhaber: AUS Service GmbH & Co. KG, 01900 Grossröhrsdorf (DE)
(72) Erfinder: Tänzer, Hendrik, 01920, Haselbachtal OT Reichenbach (DE)
(74) Vertreter: Hofmann, Klaus

(56) Entgegenhaltungen:
- DE-U1- 29 509 697
- DE-U1- 29 815 864
- DE-U1-202007 016 512
- JP-A- 11 098 662
- US-A- 5 826 542

## Beschreibung

Die Erfindung betrifft eine Abdeckung, die über das Mittelspannungs-(MS)-Leiterseil und die daran befestigten Armaturen von Abspannisolatoren montiert werden kann. Dadurch soll der bisher nur eingeschränkt mögliche Vogelschutz an MS-Abspannmasten gewährleistet werden.

Die deutschen Netzbetreiber von MS-Freileitungsnetzen sind auf der Grundlage des Bundesnaturschutzgesetzes dazu verpflichtet worden, bis zum Jahr 2012 Mittelspannungsmasten in Abhängigkeit von ihrer Lage und Konstruktion mit Vogelschutzmaßnahmen zu versehen. Die Maßnahmen, die zur Um- und Ausrüstung bestehender MS-Masten zur Verfügung stehen, sind zum Teil im Maßnahmenkatalog "Vogelschutz an Freileitungen" (1991) beschrieben.

Das Ausrüsten von Abspannmasten mit Vogelschutz wird derzeit vorrangig mit Vogelschutzabweisern ausgeführt, die auf die geerdeten Teile der Masttraverse montiert werden. Ein derartiger Vogelabweiser ist beispielsweise in DE 20 2007 016 512 U1 beschrieben. Durch die Büschelabweiser soll verhindert werden, dass ein Vogel, der auf der geerdeten Traverse steht, mit Körperteilen gleichzeitig unter Spannung stehende Teile berühren kann.

Andererseits soll verhindert werden, dass ein Vogel, der auf der unter Spannung stehenden Seilklemme steht, mit Körperteilen geerdete Teile an der Masttraverse erreicht. Diese Vogelschutzmaßnahme wird aber als nicht ausreichend bzw. nicht wirksam genug erachtet. Die zusätzliche Montage von weiteren Vogelschutzabweisern auf den Spannung führenden Teilen, beispielsweise Leiterseilklemmen, wird als zu teuer und technisch ungünstig erachtet, weil durch den hohen Schwerpunkt der Abweiser die Leiterseile zum Verdrehen neigen.

Weiterhin sind Ringgitter bekannt, die quer zum Leiterseil angeordnet sind. Sie werden jedoch beispielsweise von Störchen überstiegen und dienen somit nur dem Schutz bei einem Queranflug.

Eine weitere Möglichkeit ist die Verlängerung der Isolationsabstände zwischen den geerdeten und unter Spannung stehenden Teilen am Abspannmast. Das kann durch den Austausch der Abspannisolatoren gegen längere Isolatoren (mindestens 60 cm) erreicht werden. Diese Methode wird von den Anlagenbetreibern als zu teuer und aufwändig empfunden, weil Seilschlaufen geöffnet, Seile nachgespannt und neue Betriebsmittel (Isolatoren) eingesetzt werden müssen.

Eine Vogelschutzarmatur zur Abdeckung von auf Freileitungsmasten befestigten Stützisolatoren ist in DE 9106018 U1 beschrieben. Die Abdeckung ist U-förmig ausgeführt und besitzt V-förmig ausgebildete Schenkelwände. Nachteilig ist dabei, dass diese Abdeckungen nur für Stützisolatoren geeignet sind und auf Abspannisolatoren aufgrund ihrer Geometrie nicht befestigt werden können.

Aus DE 298 15 864 U1 sind Vogelschutzhauben für Abspann-Isolatorenketten bekannt, die über die gesamte Länge einen U-förmigen Querschnitt haben und dabei auch die erste, dem Seil zugewendete Isolatorenkappe überdecken können.

Durch diese Konstruktion kann im trockenen Zustand ein ausreichender Vogelschutz dadurch gewährleistet werden, dass ein Vogel, der auf der geerdeten Mast-Traverse steht, kein Spannung führendes Teil berühren kann bzw. ein Vogel, der auf der Vogelschutzhaube steht, vom Leiterpotential unter der Voraussetzung isoliert wird, dass die Isolatorkappe vollständig und berührungssicher durch die Vogelschutzabdeckung überdeckt ist. Im feuchten Zustand dagegen kann bei der Anordnung der Vogelschutzhaube in der Art, dass sie nur das Leiterseil, die Leiterseilklemme und die seilseitige Isolatorenkappe des Abspannisolators überdeckt, kein ausreichender Schutz des Vogels vor gefährlicher Körperdurchströmung gewährleistet werden.

Steht der Vogel dann am isolatorenseitigen Ende der Vogelschutzhauben, ist der Kriechweg, der sich entlang der Oberfläche der Vogelschutzhaube bis zum darunterliegenden Leiterpotential ergibt, zu kurz. Bei Beregnung oder Betauung würde dieser Vogel bei gleichzeitiger Berührung der geerdeten Mast-Traverse eine Körperdurchströmung erleiden, weil die Länge des feuchten Kriechweges vom Fuß des Vogels zum Leiterpotential zu kurz ist, und damit der Ableitstrom entlang dieser Oberfläche nicht wirksam begrenzt wird. Dieser Umstand sollte mit der oben erwähnten Vogelschutzhaube vermutlich dadurch behoben werden, dass die Abdeckung über die erste Isolatorkappe geschoben wird. Das würde zu einer Verlängerung des Kriechweges zwischen Vogelfuß und Leiterpotential führen und den Vogel auch im feuchten Zustand der Vogelschutzhaube vor einer Körperdurchströmung schützen.

Diese Anordnung erweist sich aber als nachteilig bezüglich der dauerhaften Gewährleistung eines ausreichenden Isoliervermögens des Abspannisolators. Durch die Abdeckung des Isolatorschirms kann der Schirm seine Aufgabe nicht mehr erfüllen, weil die Abdeckung zu einer Verkürzung des durch den vom nicht überdeckten Isolator gewährleisteten Kriechweges führt. Das bedeutet, dass die Anwendung einer Vogelschutzhaube, die die Isolatorschirme überdeckt, das Isoliervermögen des Abspannisolators negativ beeinflusst. Besonders in Mittelspannungs-Freileitungsnetzen treten sehr häufig Abspannisolatorentypen mit nur zwei Schirmen auf. Ist ein Schirm von der Vogelschutzhaube überdeckt, ist 50 % der ursprünglichen Isolierstrecke überdeckt. Weiterhin verhindert eine vollständige Überdeckung von Isolatorschirmen die Entstehung des Selbstreinigungseffektes der Isolatoroberflächen bei Regen, wodurch sich unter der Abdeckung durch Verschmutzung und Befeuchtung ein Mikroklima entwickeln kann, welches in Abhängigkeit von der Verschmutzung zu einer Beeinträchtigung des Isoliervermögens führen kann. Eine Forderung der Anlagenbetreiber ist es aber, dass zusätzlich montierte Maßnahmen nicht zu Schwachstellen im Netz und damit zur Beeinträchtigung der Netzzuverlässigkeit führen dürfen.

Aufgabe der Erfindung ist es, eine nachrüstbare und anerkannt wirksame Vogelschutzeinrichtung für Abspannmasten dem Anlagenbetreiber zur Verfügung zu stellen, ohne konstruktive Eingriffe in ein Freileitungsspannfeld durchführen zu müssen. Sie soll die Möglichkeit bieten, im spannungsfreien Zustand und unter Spannung montiert werden zu können, um eine größtmögliche Flexibilität bei der Montage zu gewähren. Es soll insbesondere gewährleistet werden, dass eine Körperdurchströmung eines Vogels, der einen Landeplatz am und in der Nähe des Abspannmastes aufsucht, mit hoher Wahrscheinlichkeit vermieden werden kann. Dabei sollen die finanziellen und zeitlichen Aufwendungen zur Durchführung der Maßnahme für die Anlagenbetreiber gering ausfallen.

Erfindungsgemäß wird die Aufgabe durch die Merkmale des Anspruches 1 gelöst. Ausgestaltende Merkmale sind in den Unteransprüchen 2 bis 9 beschrieben.

Die Erfindung beschreibt eine isolierende Vogelschutzabdeckung, die auf das Leiterseil und die Armaturen vor einem Abspannisolator montiert wird.

Die erfindungsgemäße Vogelschutzabdeckung ist wie folgt aufgebaut. Eine Abdeckung aus isolierendem Material überdeckt einen Teil des Leiterseiles und mindestens die unter Spannung stehenden Teile einer Anschlussarmatur. In Verlängerung der Abdeckung besitzt die Vogelschutzabdeckung eine in Richtung Isolator nach oben abstehende Kragenplatte, die somit den Kriechweg bzw. die Isolationsstrecke zwischen Vogelkörperteilen auf der Oberfläche der Abdeckung und dem Leiterseilpotential verlängert und dadurch den resultierenden Ableitstrom auch im feuchten Zustand wirksam reduziert, so dass er für Vögel ungefährlich ist.

Diese Kragenplatte wird in einem Winkel von 30 bis 120° zur Leiterseilebene abgewinkelt ausgeführt und ist mindestens 3 cm hoch. Die Kragenplatte kann den ersten Schirm berühren oder sie führt schräg so nahe an ihm vorbei, dass ein Großvogel nicht mit dem Schnabel an Spannung führende Teile gelangen kann und der erste Isolatorschirm nicht oder nur so wenig überdeckt wird, dass eine Selbstreinigung noch möglich ist. Ein Spalt < 15 mm, besser < 10 mm, erfüllt diese Bedingung. Somit wird das Isoliervermögen des Isolators nicht beeinträchtigt. Weiterhin kann der Vogel auf der Abdeckung direkt an der Kragenplatte stehen, und der durch die Kragenplatte entstandene längere Kriechweg und die gröβere Luftstrecke zu Spannung führenden Teilen begrenzt den Ableitstrom entlang dieser Strecke. Wenn ein Vogel auf dem Erdpotenzial (Mast-Traverse) sitzt, verhindert die Berührung der Kragenplatte mit dem Schirm das Erreichen Spannung führender Teile mit dem Schnabel. Zur Befestigung am Leiterseil und/oder an der Anschlussarmatur besitzt die Vogelschutzabdeckung eine Befestigungsvorrichtung.

Zusätzlich zur Kragenplatte kann diese nach oben durch mehrere Kunststoffstäbe verlängert werden. Die Kunststoffstäbe können seitlich abstehend oder büschelartig angeordnet werden. Besonders vorteilhaft hat sich erwiesen, wenn mindestens ein Kunststoffstab seitlich an der Kragenplatte befestigt ist und dieser halbkreisförmig einen Bogen über der Kragenplatte bildet.

Bei Doppel-Abspannisolatoren kann die Abdeckung über ein Leiterseil mit mehreren Anschlussarmaturen reichen. Die Abdeckung reicht dann über die gesamte Fläche oberhalb des Leiterseiles und der beiden Anschlussarmaturen. Die Abdeckung kann dabei in Richtung Leiterseil schmaler ausgebildet sein. Auch bei Einfach-Abspannisolatoren kann die Abdeckung in Richtung Leiterseil verjüngt ausgebildet sein.

Eine Ausführungsform besteht darin, dass die Abdeckung U-förmig ausgebildet ist und seitlich um das Leiterseil und die Anschlussarmaturen reicht.

Auch die Kragenplatte kann U-förmig ausgebildet sein und seitlich um die Anschlussarmaturen reichen.

Als Befestigungsvorrichtung kann eine Klemme mit einem Klemmkörper und einem Gegenklemmkörper vorgesehen sein. Vorzugsweise besitzt die Befestigungsvorrichtung ein Gegenstück für eine Betätigungsstange.

Durch eine ausreichende Länge der Vogelschutzabdeckung wird der Isolationsabstand zwischen geerdeten Teilen des Abspannmastes und unter Spannung stehenden Teilen der jeweiligen Freileitungsphase um die Länge der Vogelschutzabdeckung vergrößert. Das führt dazu, dass Vögel, die auf den geerdeten Teilen eines Abspannmastes stehen, auch bei ausgebreiteten Schwingen nicht unter Spannung stehende Teile berühren können und somit vor einer gefährlichen elektrischen Körperdurchströmung geschützt werden.

Weil die Vogelschutzabdeckung auch als Landeplatz für Vögel dienen kann, muss sie gleichzeitig auch einen sicheren Rastplatz für die Vögel bieten. Hierbei muss verhindert werden, dass ein Vogel eine gefährliche Körperdurchströmung erleiden kann, wenn er auf der Abdeckung sitzt oder steht und gleichzeitig mit einem Körperteil geerdete Teile an der Masttraverse berühren kann. Der Vogel kann geerdete Teile nur dann erreichen, wenn er am isolatorseitigen Ende der Abdeckung steht. Das bedeutet, dass für diese Position eine ausreichend große Isolierstrecke zwischen dem Standplatz des Vogels und unter Spannung stehenden Teilen (Leiterseile, Seilklemmen, Isolatorarmaturen o.ä.) vorhanden sein muss.

In der Erfindung wird das durch einen erhöhten Abschluss der Abdeckung am isolatorseitigen Ende erreicht. Dieser Abschluss, der als Kragenplatte bezeichnet wird und als ebene oder umlaufende Kante oder eine auf eine andere Art und Weise ausgeführte Abwinkelung sein kann, bewirkt eine Verlängerung der Isolierstrecke zwischen Vogel und Spannung führenden Teilen, insbesondere Teile unter der Abdeckung. Die Abwinkelung erfolgt vorzugsweise in einem Winkel zwischen 30 und 120°. Damit wird auch bei feuchten Witterungsbedingungen ein wirksamer Schutz gegen Körperdurchströmung geboten.

Die Gefahr für Großvögel, beim Landen und Sitzen auf den Armaturen von MS-Freileitungen einen Erdschluss oder Erdkurzschluss einzuleiten, wird damit deutlich verringert.

Nachfolgend wird die Erfindung an zwei Ausführungsbeispielen näher erläutert. Es zeigen:
- Fig. 1: Draufsicht einer Vogelschutzabdeckung für Einfach- Abspannisolatoren
- Fig. 2: Seitenansicht einer Vogelschutzabdeckung für Einfach-Abspannisolatoren
- Fig. 3: Draufsicht einer Vogelschutzabdeckung für Doppel- Abspannisolatoren
- Fig. 4: Seitenansicht einer Vogelschutzabdeckung für Einfach-Abspannisolatoren

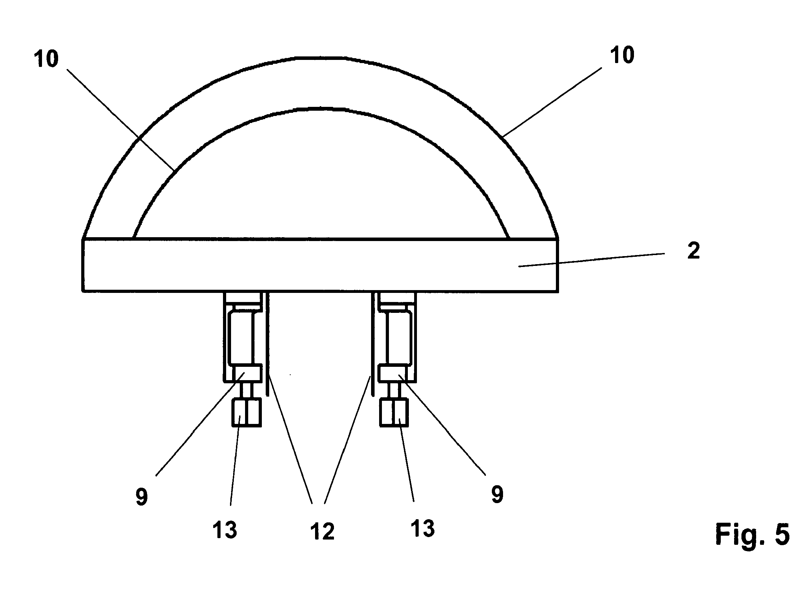

- Fig. 5: Längsansicht einer Vogelschutzabdeckung für Doppel-Abspannisolatoren

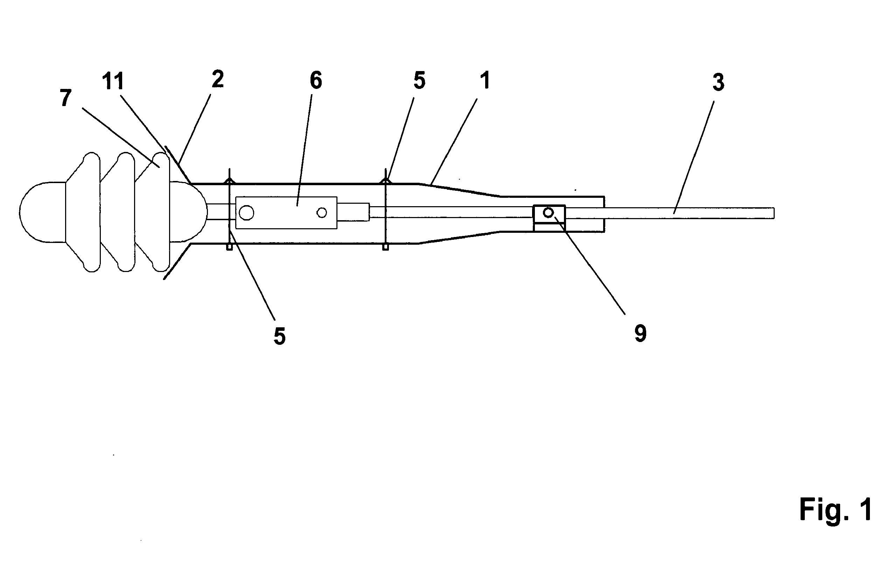

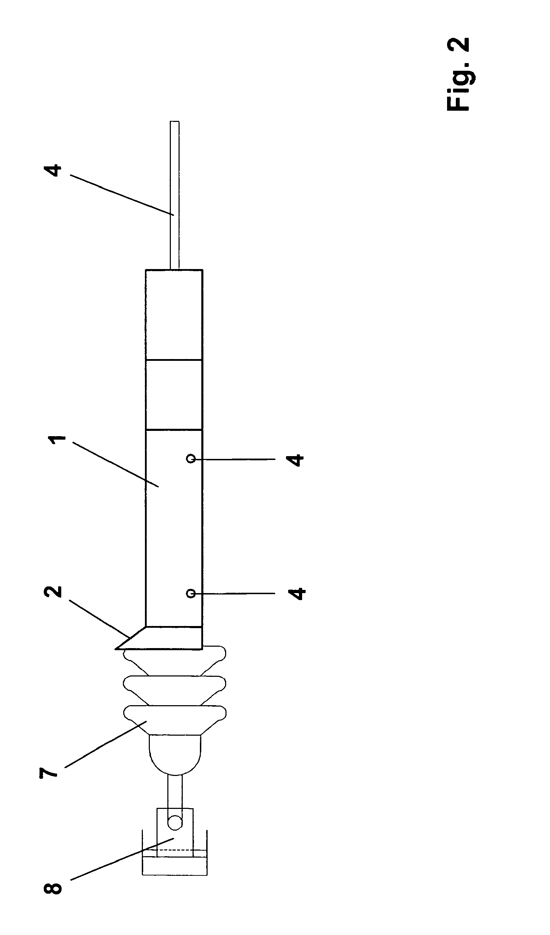

Die Fig. 1 und 2 zeigen eine Vogelschutzhaube für Einfach-Abspannisolatoren.

Bei dieser Vogelschutzabdeckung handelt es sich um eine Abdeckung 1 aus isolierendem Kunststoff, die über das Leiterseil 3 und die angrenzende, unter Spannung stehende Anschlussarmatur 6 an Einfach-Abspannisolatoren montiert wird. Sie hat ein U-Profil mit einer Länge von 70 cm und eine Breite im vorderen Bereich von 10 cm. Im hinteren Bereich in Richtung Leiterseil 3 verjüngt sich das U-Profil auf 6 cm. Am vorderen, isolatorseitigen Ende der Abdeckung 1 befindet sich eine Kragenplatte 2, die ca. 10 cm hoch ist bzw. 10 cm nach rechts und links trichterförmig herausragt. Die Kragenplatte 2 ist in einem Winkel von etwa 45° ausgebildet. Sie kann als abgekantete Verlängerung der Abdeckung 1 ausgebildet oder zusätzlich angeschweißt oder angeklebt sein. Die Kragenplatte 2 führt an einem Spalt 11 etwa 10 mm am ersten Schirm des Isolators 7 vorbei und endet oberhalb des ersten Isolatorschirms.

Zur zusätzlichen Sicherung der Vogelschutzhaube sind je zwei Befestigungslöcher 4 in den Haubenseiten gebohrt, in denen Kunststoffschrauben 5 eingeschraubt werden. Dadurch wird ein Herunterfallen der Vogelschutzabdeckung bei defekter Seilklemme verhindert bzw. eine mechanische Entlastung der Seilklemme bei hohen Windgeschwindigkeiten erreicht.

Durch die Länge der Vogelschutzhaube von 70 cm wird der Abstand zwischen offen liegenden, Spannung führenden Teilen und geerdeten Teilen um 70 cm verlängert, wodurch ein Überbrücken von Erd- und Leiterpotential durch einen Vogel mit hoher Wahrscheinlichkeit verhindert wird. Falls sich der Vogel auf dem isolatorseitigen Ende der Vogelschutzhaube befindet und mit einer Schwinge geerdete Teile an der Masttraverse berührt, ist aufgrund der Kragenplatte 2 die Isolierstrecke zwischen dem nächsten Spannung führenden Teil und dem Vogel ausreichend groß, um ihn vom Leiterpotential auch bei feuchten Witterungsbedingungen zu isolieren.

Die Vogelschutzhaube kann unter Spannung mit geeigneten Montagewerkzeugen und im spannungsfreien Zustand montiert werden. Eine komplette Vogelschutzmaßnahme an einem Abspannmast besteht aus 6 Vogelschutzhauben. Es sind keine Montagearbeiten an den Leiterseilen 3 oder sonstigen Armaturen des Mastes durchzuführen.

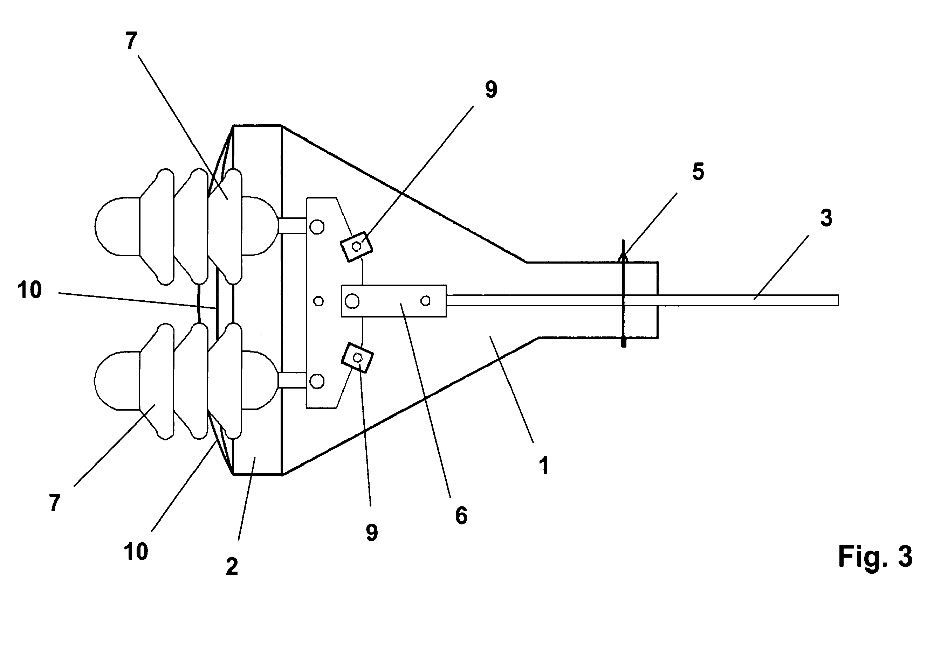

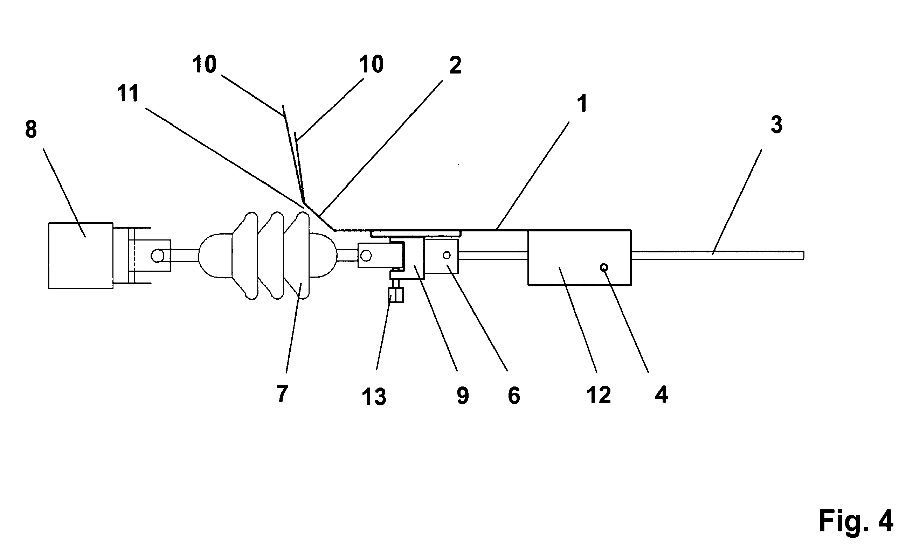

Ein weiteres Ausführungsbeispiel ist in den Fig. 2, 3 und 4 dargestellt. Sie zeigten eine Vogelschutzabdeckung für Doppelabspannisolatoren.

Bei dieser Vogelschutzabdeckung handelt es sich um eine Abdeckung 1 aus isolierendem Kunststoff, die über die unter Spannung stehenden Armaturen am Doppel-Abspannisolator und das angrenzende Leiterseil 3 montiert wird. Die Abdeckung 1 besteht aus einer Kunststoffplatte, deren Profil so gestaltet ist, dass es die im Vergleich zum Einfach-Abspannisolator breiteren Armaturen komplett abdeckt. Die Abdeckung 1 ist 60 cm lang und an der breitesten Stelle 60 cm breit. Am vorderen, isolatorseitigen Ende der Abdeckhaube befindet sich eine Kragenplatte 2, die ca. 15 cm hoch ist und schräg nach vorn in einem Winkel von ca. 45° den ersten Schirm des Isolators 7 teilweise mit abdeckt.

An beiden Seiten der Kragenplatte 2 sind je zwei Kunststoffstäbe 10 befestigt, die über der Kragenplatte 2 in unterschiedlicher Höhe einen Bogen spannen. Durch diese beiden Bögen, die als Abweiser fungieren, werden Großvögel wirksam gehindert, das jeweils dahinter liegende Potential mit Körperteilen zu erreichen.

Es ist möglich, den erhöhten Abschluss der Kragenplatte mit zusätzlichen einzelnen oder mehreren Kunststoffstäben zu verlängern, um beispielsweise ein Übergreifen des Randes der Abdeckung zu behindern. Die Kunststoffstäbe können auch büschelartig angeordnet sein.

An der Unterseite der Abdeckung 1 befinden sich zwei Klemmen 9, die zur festen Montage der Abdeckung auf den Isolatorarmaturen dienen. Die Klemme 9 besitzt einen Klemmkörper und einen Gegenklemmkörper, die an einem Gegenstück 13 mittels Betätigungsstange feststellbar sind. Zur zusätzlichen Sicherung der Vogelschutzhaube ist an einem seitlichen Befestigungsprofil 12, welches ebenfalls aus Isoliermaterial besteht, ein Befestigungsloch 4 in den Haubenseiten gebohrt, in die eine Kunststoffschraube 5 eingeschraubt wird.

Durch die Länge der Vogelschutzabdeckung von 60 cm wird der Abstand zwischen offen liegenden, Spannung führenden Teilen und geerdeten Teilen um 60 cm verlängert, wodurch ein Überbrücken von Erd- und Leiterpotential durch einen Vogel mit hoher Wahrscheinlichkeit verhindert wird. Falls sich der Vogel auf dem isolatorseitigen Ende der Vogelschutzabdeckung befindet und mit einer Schwinge geerdete Teile an der Masttraverse 8 berührt, ist aufgrund der Kragenplatte 2 die Isolierstrecke zwischen dem nächsten Spannung führenden Teil und dem Vogel ausreichend groß, um ihn vom Leiterpotential auch bei feuchten Witterungsbedingungen zu isolieren.

Die Vogelschutzabdeckung kann ebenfalls unter Spannung mit geeigneten Montagewerkzeugen und im spannungsfreien Zustand montiert werden. Eine komplette Vogelschutzmaßnahme an einem Abspannmast besteht aus 6 Vogelschutzabdeckungen, bei einem Endmast aus 3 Vogelschutzabdeckungen. Es sind keine Montagearbeiten an den Seilen oder sonstigen Armaturen des Mastes durchzuführen.

Die isolierenden Abdeckungen können aus verschiedenen isolierenden Materialien (PE oder PA) bestehen, die die Forderung nach ausreichendem Isoliervermögen, mechanischer Festigkeit und Witterungsbeständigkeit erfüllen.

Die Befestigung der Vogelschutzabdeckungen kann auf verschiedenen Wegen erfolgen, wenn dabei das Isoliervermögen und die mechanische Festigkeit der montierten Haube nicht beeinträchtigt werden.

Der erhöhte Abschluss der Vogelschutzabdeckung am isolatorseitigen Ende kann als vollflächige oder zum Teil gelochte Kragenplatte 2 aufgebaut sein.

### Bezugszeichenaufstellung

- 1: Abdeckung
- 2: Kragenplatte
- 3: Leiterseil
- 4: Befestigungsloch
- 5: Kunststoffschraube
- 6: Anschlussarmatur
- 7: Isolator
- 8: Masttraverse
- 9: Klemme
- 10: Kunststoffstab
- 11: Spalt
- 12: Befestigungsprofil
- 13: Gegenstück

## Patentansprüche

1. Isolierende Vogelschutzabdeckung für Leiterseil und Armaturen an Abspannisolatoren von Mittelspannungsfreileitungen mit einer Abdeckung (1) aus isolierendem Material, die einen Teil des Leiterseiles (3) und mindestens die unter Spannung stehenden Teile einer Anschlussarmatur (6) überdeck**en kann** sowie einer Befestigungsvorrichtung , **dadurch gekennzeichnet, dass** an die Abdeckung (1) eine nach oben abstehende Kragenplatte (2) anschließt, die in einem Winkel von 30 bis 120° zur Leiterseilebene abgewinkelt, mindestens 3 cm hoch ist und bis an einen ersten Isolatorschirm (7) oder nahe an ihm vorbei reich**en kann.**

2. Isolierende Vogelschutzabdeckung nach Anspruch 1, **dadurch gekennzeichnet, dass** an der Kragenplatte (2) nach oben gerichtet Kunststoffstäbe (10) angeordnet sind.

3. Isolierende Vogelschutzabdeckung nach Anspruch 2, **dadurch gekennzeichnet, dass** mindestens ein Kunststoffstab (10) halbkreisförmig einen Bogen über der Kragenplatte (2) bildet.

4. Isolierende Vogelschutzabdeckung nach einem der Ansprüche 1 bis 3, **dadurch gekennzeichnet, dass** die Abdeckung (1) über ein Leiterseil (3) mit mehreren Anschlussarmaturen (6) reicht.

5. Isolierende Vogelschutzabdeckung nach einem der Ansprüche 1 bis 4, **dadurch gekennzeichnet, dass** die Abdeckung (1) in Richtung Leiterseil (3) verjüngt ausgebildet ist.

6. Isolierende Vogelschutzabdeckung nach einem der Ansprüche 1 bis 5, **dadurch gekennzeichnet, dass** die Abdeckung (1) U-förmig ausgebildet ist und seitlich um das Leiterseil (3) und die Anschlussarmaturen (6) reicht.

7. Isolierende Vogelschutzabdeckung nach einem der Ansprüche 1 bis 6, **dadurch gekennzeichnet, dass** die Kragenplatte (2) U-förmig ausgebildet ist und seitlich um die Anschlussarmaturen (6) reicht.

8. Isolierende Vogelschutzabdeckung nach einem der Ansprüche 1 bis 7, **dadurch gekennzeichnet, dass** die Befestigungsvorrichtung eine Klemme (9) mit einem Klemmkörper und einem Gegenklemmkörper ist.

9. Isolierende Vogelschutzabdeckung nach einem der Ansprüche 1 bis 8, **dadurch gekennzeichnet, dass** die Befestigungsvorrichtung ein Gegenstück (13) für eine Betätigungsstange aufweist.

## Claims

1. Insulating bird protection cover for conductor cable and fittings on strain insulators of medium-voltage overhead lines with a cover (1) consisting of an insulating material, it being possible for said cover to cover part of the conductor cable (3) and at least the live parts of a connection fitting (6), and a fastening apparatus, **characterized in that** an upwardly protruding collar plate (2) adjoins the cover (1), said collar plate being bent back at an angle of from 30 to 120° with respect to the conductor cable plane, being at least 3 cm high and being capable of reaching as far as a first insulator shield (7) or close past said insulator shield.

2. Insulating bird protection cover according to Claim 1, **characterized in that** plastic bars (10) are arranged, pointing upwards, on the collar plate (2).

3. Insulating bird protection cover according to Claim 2, **characterized in that** at least one plastic bar (10) forms, with a semicircular shape, an arch over the collar plate (2).

4. Insulating bird protection cover according to one of Claims 1 to 3, **characterized in that** the cover (1) reaches over a conductor cable (3) with a plurality of connection fittings (6).

5. Insulating bird protection cover according to one of Claims 1 to 4, **characterized in that** the cover (1) is designed to taper in the direction of the conductor cable (3).

6. Insulating bird protection cover according to one of Claims 1 to 5, **characterized in that** the cover (1) is in the form of a U and reaches laterally around the conductor cable (3) and the connection fittings (6).

7. Insulating bird protection cover according to one of Claims 1 to 6, **characterized in that** the collar plate (2) is in the form of a U and reaches laterally around the connection fittings (6).

8. Insulating bird protection cover according to one of Claims 1 to 7, **characterized in that** the fastening apparatus is a clamp (9) with a clamping body and an opposing clamping body.

9. Insulating bird protection cover according to one of Claims 1 to 8, **characterized in that** the fastening apparatus has an opposing piece (13) for an actuating rod.

## Revendications

1. Recouvrement isolant destiné à protéger des oiseaux le câble conducteur et les accessoires d'isolateur de haubanages de conducteurs aériens à tension moyenne, présentant un recouvrement (1) en un matériau isolant qui peut recouvrir une partie du câble conducteur (3) et au moins les parties sous tension d'un accessoire de raccordement (6), ainsi qu'un dispositif de fixation,
**caractérisé en ce que**
une plaque à collet (2) débordant vers le haut se raccorde au recouvrement (1) et est coudée d'un angle de 30 à 120° par rapport au plan du câble conducteur à une hauteur d'au moins 3 cm et peut s'étendre jusqu'à un premier écran d'isolateur (7) ou à proximité de ce dernier.

2. Recouvrement isolant de protection contre les oiseaux selon la revendication 1, **caractérisé en ce que** des barres (10) en matière synthétique orientées vers le haut sont disposées sur la plaque à collet (2).

3. Recouvrement isolant de protection contre les oiseaux selon la revendication 2, **caractérisé en ce qu'**au moins une barre (10) en matière synthétique de forme semi-circulaire forme un arceau qui surmonte la plaque à collet (2).

4. Recouvrement isolant de protection contre les oiseaux selon l'une des revendications 1 à 3, **caractérisé en ce que** le recouvrement (1) s'étend au-dessus d'un câble conducteur (3) doté de plusieurs accessoires de raccordement (6).

5. Recouvrement isolant de protection contre les oiseaux selon l'une des revendications 1 à 4, **caractérisé en ce que** le recouvrement (1) se rétrécit en direction du câble conducteur (3).

6. Recouvrement isolant de protection contre les oiseaux selon l'une des revendications 1 à 5, **caractérisé en ce que** le recouvrement (1) est configuré en U et s'étend latéralement autour du câble conducteur (3) et des accessoires de raccordement (6).

7. Recouvrement isolant de protection contre les oiseaux selon l'une des revendications 1 à 6, **caractérisé en ce que** la plaque à collet (2) a la forme d'un U et s'étend latéralement autour des accessoires de raccordement (6).

8. Recouvrement isolant de protection contre les oiseaux selon l'une des revendications 1 à 7, **caractérisé en ce que** le dispositif de fixation est une pince (9) qui présente un corps de pince et un corps complémentaire de pinçage.

9. Recouvrement isolant de protection contre les oiseaux selon l'une des revendications 1 à 8, **caractérisé en ce que** le dispositif de fixation présente une pièce (13) complémentaire d'une barre d'actionnement.
